# EUROPÄISCHE PATENTSCHRIFT

(11) **EP 1 994 075 B1**
(45) Veröffentlichungstag und Bekanntmachung des Hinweises auf die Patenterteilung: **02.09.2009**
(21) Anmeldenummer: 07712354.5
(22) Anmeldetag: 28.02.2007
(51) Int. Cl.: C08G 69/26

(54) **Teilaromatische Copolyamide mit hoher Kristallinität**
Partially aromatic copolyamides with a high crystallinity
Copolyamides partiellement aromatiques à haute cristallinité

(30) Priorität: 08.03.2006 EP 06110815
(43) Veröffentlichungstag der Anmeldung: 26.11.2008
(73) Patentinhaber: BASF SE, 67056 Ludwigshafen (DE)
(72) Erfinder: DESBOIS, Philippe, 68535 Edingen-Neckarhausen (DE); BLINNE, Gerd, 67273 Bobenheim (DE); NEUHAUS, Ralf, 69124 Heidelberg (DE); STAWITZKI, Hagen, 76137 Karlsruhe (DE); WEIS, Hans-Joachim, 67069 Ludwigshafen (DE)
(86) Internationale Anmeldenummer: PCT/EP2007/051865
(87) Internationale Veröffentlichungsnummer: WO 2007/101809

(56) Entgegenhaltungen:
- EP-A- 0 536 681
- DE-A1- 4 329 676
- US-A- 3 379 695

## Beschreibung

Die Erfindung betrifft teilaromatische teilkristalline thermoplastische Polyamidformmassen, enthaltend
A) 40 bis 100 Gew.-% eines Copolyamids aufgebaut aus
   a1) 30 bis 44 mol-% Einheiten, welche sich von Terephthalsäure ableiten
   a2) 6 bis 20 mol-% Einheiten, welche sich von Isophthalsäure ableiten
   a3) 42 bis 49,5 mol-% Einheiten, welche sich von Hexamethylendiamin ableiten
   a4) 0,5 bis 8 mol-% Einheiten, welche sich von aromatischen Diaminen mit 6 bis 30 C-Atomen ableiten
   wobei die Molprozente der Komponenten a1) bis a4) zusammen 100 % ergeben und
B) 0 bis 50 Gew.-% eines faser- oder teilchenförmigen Füllstoffes
C) 0 bis 30 Gew.-% eines kautschukelastischen Polymerisates
D) 0 bis 30 Gew.-%, weiterer Zusatzstoffe und Verarbeitungshilfsmittel
wobei die Gewichtsprozente der Komponenten A) bis D) zusammen 100 % ergeben.

Weiterhin betrifft die Erfindung die Verwendung dieser Formmassen zur Herstellung von Fasern, Folien und Formkörpern sowie die aus den erfindungsgemäßen Formmassen erhältlichen Formkörper.

Transparente, amorphe Polyamide aus Terephthalsäure/Isophthalsäure (IPS/TPS) und Hexamethylendiamin (HMD) sowie m-, p-Xylylendiamin (MXD/PXD) sind aus der US 5,028,462 und GB-766 927 bekannt.

Sehr hohe Anteile an TPS sind aus der JP-A 08/3312 bekannt, wobei die Verarbeitbarkeit sehr schwierig ist.

Die bekannten amorphen Copolyamide sind gemäß der technischen Lehre der Schriften transparent und zeigen nur sehr geringe kristalline Anteile.

Dies ist zwar für Anwendungen von Vorteil, wobei eine Resistenz gegen Chemikalien oder Durchsichtigkeit (Transparenz) der Formkörper erforderlich ist, jedoch zeigen amorphe Polyamide Nachteile bei Anwendungen z.B. im Motorraumbereich, die eine dauerhafte Beständigkeit bei hoher Umgebungstemperatur erfordern. Teilaromatische Copolyamide aus Terephthalsäure/Isophthalsäure Einheiten mit unterschiedlichen anderen Aufbaukomponenten sind u.a. aus der EP-A 121 984, EP-A 291 096, US 4,607,073, EP-A 217 960 und EP-A 299 444 bekannt.

Hohe Anteile an Hexamethylendiamin/Terephthalsäure verbessern zwar die Kristallinität und erhöhen signifikant die Glastemperaturen, jedoch verschlechtert sich mit zunehmendem Gehalt dieser Einheiten die Verarbeitbarkeit (Temperaturen meist über 320°C, für füllstoffhaltige Polyamide 350°C) und die Herstellung derartiger Polyamide (siehe R.D. Chapman et al., Textile Research Journal 1981, S. 564).

Aufgabe der vorliegenden Erfindung war es, teilkristalline teilaromatische Copolyamidformmassen zur Verfügung zu stellen, die einen hohen Kristallinitätsgrad und hohe Glastemperatur bei ausreichend hohen Schmelzpunkten aufweisen, so dass die Copo-Iyamide besser verarbeitbar sind. Gleichzeitig sollen die Copolyamide bessere mechanische Eigenschaften (insbesondere multiaxiale Schlagzähigkeit) und Oberflächenqualität von faserverstärkten Formkörpern aufweisen.

Demgemäß wurde die eingangs definierten Formmassen gefunden.

Bevorzugte Ausführungsformen sind den Unteransprüchen zu entnehmen.

Als Komponente A) enthalten die erfindungsgemäßen teilaromatischen teilkristallinen thermoplastischen Polyamidformmassen 40 bis 100, vorzugsweise 50 bis 100 und insbesondere 70 bis 100 Gew.-% eines Copolyamids, aufgebaut aus
a1) 30 bis 44, vorzugsweise 32 bis 40 und insbesondere 32 bis 38 mol-% Einheiten, welche sich von Terephthalsäure ableiten,
a2) 6 bis 20, vorzugsweise 10 bis 18 und insbesondere 12 bis 18 mol-% Einheiten, welche sich von Isophthalsäure ableiten,
a3) 42 bis 49,5, vorzugsweise 45 bis 48,5 und insbesondere 46,5 bis 48 mol-% Einheiten, welche sich von Hexamethylendiamin ableiten,
a4) 0,5 bis 8, vorzugsweise 1,5 bis 5 und insbesondere 2 bis 3,5 mol-% Einheiten, welche sich von aromatischen Diaminen mit 6 bis 30, vorzugsweise 6 bis 29 und insbesondere 6 bis 17 C-Atomen ableiten,
wobei die Molprozente der Komponenten a1) bis a4) zusammen 100 % ergeben.

Die Diamineinheiten a3) und a4) werden vorzugsweise äquimolar mit den Dicarbonsäureeinheiten a1) und a2) umgesetzt.

Geeignete Monomere a4) sind vorzugsweise cyclische Diamine der Formel 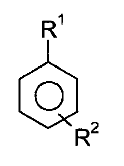 in der
- R¹: NH₂ oder NHR³,
- R²: in m-, o- oder p-Stellung zu R¹ steht und NH₂ oder NHR³ bedeutet,
wobei R³ für einen Alkylrest mit 1 bis 6 C-Atomen, vorzugsweise 1 bis 4 C-Atomen steht.

Besonders bevorzugte Diamine sind p- und/oder m-Xylylendiamin oder deren Mischungen.

Als weitere Monomere a4) seien o-Xylylendiamin und alkylsubstituierte Xylylendiamine genannt.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 290°C bis 340°C, bevorzugt von 292 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bei den teilaromatischen Copolyamide sollen erfindungsgemäß solche verstanden werden, die einen Kristallinitätsgrad > 30 %, bevorzugt > 35 %, und insbesondere > 40 % aufweisen.

Der Kristallinitätsgrad ist ein Maß für den Anteil an kristallinen Fragmenten im Copolyamid und wird durch Röntgenbeugung oder indirekt durch Messung von DHkrist. bestimmt.

Selbstverständlich können auch Mischungen der teilaromatischen Copolyamide umgesetzt werden, wobei das Mischungsverhältnis beliebig ist.

Geeignete Verfahren zur Herstellung der erfindungsgemäßen Copolyamide sind dem Fachmann bekannt.

Als bevorzugte Herstellweise sei der Batch-Prozess (diskontinuierliche Herstellweise) genannt. Dabei wird die wässrige Monomerenlösung innerhalb 0,5 bis 3 h in einem Autoklaven auf Temperaturen von 280 - 340°C erhitzt, wobei ein Druck von 10 - 50, insbesondere 15 - 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 - 2 h, bis man einen Enddruck von 1 bis 5 bar erreicht hat. Anschließend wird die Polymerschmelze ausgetragen, abgekühlt und granuliert.

Ein anderes bevorzugtes Verfahren erfolgt in Anlehnung an die in den EP-A 129195 und 129 196 beschriebenen Verfahren.

Gemäß diesem Verfahren wird eine wässrige Lösung der Monomeren a1) bis a4) sowie gegebenenfalls a5) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 - 30 min. polykondensiert. Es versteht sich von selbst, dass die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert.

In einer besonders bevorzugten Ausführungsform ist es auch möglich, die Komponenten B) und gegebenenfalls C) und/oder D) schon in den Entgasungsextruder zum Präpolymeren der Komponente A) zu geben, wobei in diesem Fall der Entgasungsextruder üblicherweise mit geeigneten Mischelementen, wie Knetblöcken, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25°C liegt nach der Nachkondensation in fester Phase oder den anderen vorstehend genannten Herstellverfahren im allgemeinen im Bereich von 100 bis 500 ml/g, vorzugsweise von 110 bis 200 ml/g.

Als weiteren Bestandteil können die erfindungsgemäßen Copolyamide 0 bis 50, vorzugsweise bis 35, insbesondere 15 bis 35 Gew.% eines faser- oder teilchenförmigen Füllstoffes (Komponente (B)) oder deren Mischungen enthalten.

Bevorzugte faserförmige Verstärkungsstoffe sind Kohlenstofffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen. Im fertigen Spritzgussteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Weitere Zusatzstoffe C) sind beispielsweise in Mengen bis zu 30, vorzugsweise 1 bis 30 Gew.-%, insbesondere 10 bis 15 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

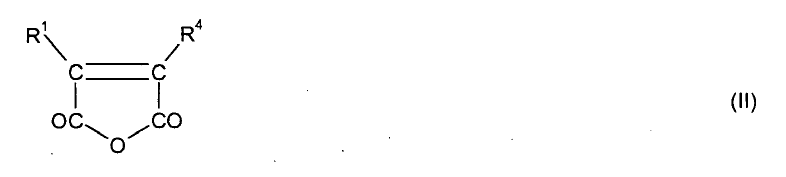

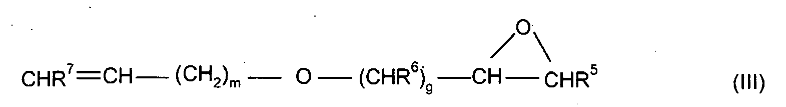

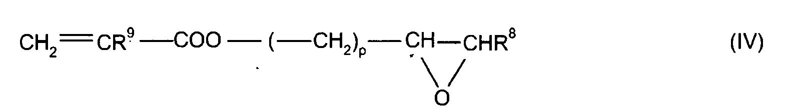

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säure-anhydridgruppen enthaltenden Monomeren sowie der restlichen Menge an (Meth)acrylsäureestern.

Besonders bevorzugt sind Copolymerisate aus

| | |
|---|---|
| 50 bis 98,9 | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 5 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zügabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen.sowie funktionelle Gruppen, die durch Mitverwendung von Monomeren der allgemeinen Formel 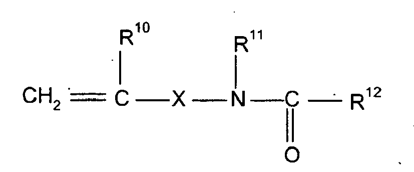 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe o- der 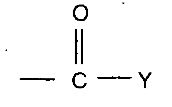
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Neben der wesentlichen Komponente A) sowie gegebenenfalls B) und C) können die erfindungsgemäßen Formmassen weitere Zusatzstoffe und Verarbeitungshilfsmittel D) enthalten. Deren Anteil beträgt bis zu 30, vorzugsweise bis zu 15 Gew.-%, bezogen auf das Gesamtgewicht der Komponenten (A) bis (D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO3.Pb(OH)2), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe3O4), Spinellschwarz (Cu(Cr,Fe)2O4), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Als Flammschutzmittel seien hier nur roter Phosphor und die anderen an sich für Polyamide bekannten Flammschutzmittel genannt.

Die erfindungsgemäßen thermoplastischen Formmassen bei Anwesenheit der Komponenten B) - D) können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Die erfindungsgemäßen Formmassen zeichnen sich durch höhere Wärmeformbeständigkeit, gute multiaxiale Schlagzähigkeit, ausreichend hohe Schmelzpunkte bei gleichzeitig hoher Glasübergangstemperatur und hohem Kristallinitätsgrad aus. Insbesondere lassen sie sich problemlos thermoplastisch verarbeiten und eignen sich demgemäß zur Herstellung von Fasern, Folien und Formkörpern. Faserverstärkte Formkörper weisen eine sehr gute Oberfläche auf, so dass sie insbesondere für Anwendungen im Fahrzeugbau und für E/E-Anwendungen geeignet sind.

### Beispiele

### Allgemeine Herstellvorschrift

Zu x1 g Wasser wurden x2 g HMD-Lösung (70 %ige in Wasser), x3 g Metaxylylendiamin, x4 g Terephthalsäure, x5 g Isophthalsäure und x6g Propionsäure in einem Kunststoffbehälter bei 90°C vermischt.

Die erhaltene Lösung wurde in einen 1,5 I-Autoklav überführt. Der Autoklav wurde bei 340°C Außentemperatur betrieben mit einer Drehzahl von 40 Upm und einem Druck von 20 bar/abs. über eine Zeit von 60 min.

Anschließend wurde der Ansatz in 60 min auf einen Druck von 2 bar entspannt.

Das erhaltene PA-Polymer wurde granuliert.

Es wurden folgende Messungen durchgeführt:
Die thermische Analyse (DSC) wurde gemäß DIN 53765 durchgeführt (mit TAI-Q 1000 Gerät) für Tₘ, T_{g}, T_{KK} und ΔH. Es wurde die 2. Aufheizkurve ausgewertet (20 K/min für Aufheizkurve und Abkühlkurve).

VZ wurde gemäß ISO 307 gemessen.

Die Zusammensetzungen der Formmassen und die Ergebnisse der Messungen sind den Tabellen zu entnehmen.

**Tabelle 1**

| Bsp | 6T/6I MXDA T [Gew.-%] | X1 Wasser g | X2 HMD g | X3 MXDA g | X4 T g | X5 I g | X6 IPrCOOH g | Tm °C | Tg °C | Tkk °C | DH J/g | VZ |
|---|---|---|---|---|---|---|---|---|---|---|---|---|
| 1 | 70/25/5 | 381,06 | 255,1 (70,8 % in Wasser) | 10,14 | 197,71 | 66,20 | 0,9 | 310 | 136 | 255 | 53 | 127 |
| 2 | 68/25/7 | 382,52 | 249.93 (70,78 % in Wasser) | 14,19 | 197,36 | 66,2 | 0,9 | 300 | 125 | 257 | 59 | 81 |
| 3 | 68/22/10 | 381,45 | 245,45 (69,81 % in Wasser) | 20,27 | 204,78 | 58,25 | 0,9 | 298 | 133 | 246 | 51 | 93 |
| 4 | 65/30/5 | 381,06 | 255,1 (70,8 % in Wasser) | 10,14 | 183,47 | 79,44 | 0,9 | 295 | 125 | 250 | 49 | 130 |
| 1V | 55/25/20 | 490,69 | 218,91 (69,81 % in Wasser) | 40,53 | 195,10 | 66,20 | 0,9 | 280 | 138 | 215 | 16 | 115 |

**Tabelle 2**

| | | 70/25/5 | 68/25/7 | 68/22/10 | 65/30/5 | |
|---|---|---|---|---|---|---|
| | | Beispiel 1 | Beispiel 2 | Beispiel 3 | Beispiel 4 | Vergleichsbeispiel 1 |
| Hexamethylendiamin | mol-% | 47,7 | 47,7 | 45,3 | 47,7 | 40,5 |
| | Gew.-% | 39,1 | 39,1 | 37,0 | 39,1 | 32,9 |
| Terephthalsäure | mol-% | 37,5 | 36,5 | 38,9 | 35,0 | 37,33 |
| | Gew.-% | 43,9 | 42,8 | 45,5 | 41,0 | 43,35 |
| Isophthalsäure | mol-% | 12,5 | 13,5 | 11,1 | 15,1 | 12,67 |
| | Gew.-% | 14,7 | 15,9 | 12,9 | 17,7 | 14,71 |
| m-Xylylendiamin | mol-% | 2,3 | 2,3 | 4,7 | 2,3 | 9,46 |
| | Gew.-% | 2,25 | 2,25 | 4,5 | 2,25 | 9,01 |
| ΔH_{krist.} | [J/g] | 53 | 52 | 50 | 49 | 16 |
| VZ | [ml/g] | 127 | 81 | 93 | 130 | 115 |
| Tm | | 308 | 303 | 298 | 295 | 280 |
| Tg | | 133 | 129 | 132 | 128 | 138 |
| Tkk | | 255 | 252 | 250 | 248 | 215 |

## Patentansprüche

1. Teilaromatische teilkristalline thermoplastische Polyamidformmassen, enthaltend
A) 40 bis 100 Gew.-% eines Copolyamids aufgebaut aus a1) 30 bis 44 mol-% Einheiten, welche sich von Terephthalsäure ableiten a2) 6 bis 20 mol-% Einheiten, welche sich von Isophthalsäure ableiten
a3) 42 bis 49,5 mol-% Einheiten, welche sich von Hexamethylendiamin ableiten
a4) 0,5 bis 8 mol-% Einheiten, welche sich von aromatischen Diaminen mit 6 bis 30 C-Atomen ableiten
wobei die Molprozente der Komponenten a1) bis a4) zusammen 100 % ergeben und
B) 0 bis 50 Gew.-% eines faser- oder teilchenförmigen Füllstoffes
C) 0 bis 30 Gew.-% eines kautschukelastischen Polymerisates
D) 0 bis 30 Gew.-%, weiterer Zusatzstoffe und Verarbeitungshilfsmittel
wobei die Gewichtsprozente der Komponenten A) bis D) zusammen 100 % ergeben.

2. Polyamidformmassen nach Anspruch 1, in denen das Copolyamid A) aufgebaut ist aus
a1) 32 bis 40 mol-%
a2) 10 bis 18 mol-%
a3) 45 bis 48,5 mol-%
a4) 1,5 bis 5 mol-%

3. Polyamidformmassen nach den Ansprüchen 1 oder 2, in denen das aromatische Diamin a4) aus
p-Xylylendiamin oder
m-Xylylendiamin oder
o-Xylylendiamin oder
alkylsubstituierten Xylylendiaminen
oder deren Mischungen aufgebaut ist.

4. Polyamidformmassen nach den Ansprüchen 1 bis 3, in denen das Copolyamid A) einen Triamingehalt von weniger als 0,5 Gew.-% aufweist.

5. Polyamidformmassen nach den Ansprüchen 1 bis 4, in denen das Copolyamid A) einen Kristallinitätsgrad größer 20 % aufweist.

6. Verwendung der Polyamidformmassen gemäß den Ansprüchen 1 bis 5 zur Herstellung von Fasern, Folien und Formkörpern.

7. Formkörper, erhältlich aus den Polyamidformmassen gemäß den Ansprüchen 1 bis 5.

## Claims

1. A semiaromatic semicrystalline thermoplastic polyamide molding composition, comprising
A) from 40 to 100% by weight of a copolyamide composed of
a1) from 30 to 44 mol% of units which derive from terephthalic acid
a2) from 6 to 20 mol% of units which derive from isophthalic acid
a3) from 42 to 49.5 mol% of units which derive from hexamethylenediamine
a4) from 0.5 to 8 mol% of units which derive from aromatic diamines having from 6 to 30 carbon atoms,
where the molar percentages of components a1) to a4) together give 100%, and
B) from 0 to 50% by weight of a fibrous or particulate filler
C) from 0 to 30% by weight of an elastomeric polymer
D) from 0 to 30% by weight of other additives and processing aids,
where the percentages by weight of components A) to D) together give 100%.

2. The polyamide molding composition according to claim 1, in which the copolyamide A) is composed of
a1) from 32 to 40 mol%
a2) from 10 to 18 mol%
a3) from 45 to 48.5 mol%
a4) from 1.5 to 5 mol%

3. The polyamide molding composition according to claim 1 or 2, in which the aromatic diamine a4) is composed of
p-xylylenediamine or
m-xylylenediamine or
o-xylylenediamine or
alkyl-substituted xylylenediamines
or a mixture of these.

4. The polyamide molding composition according to claims 1 to 3, in which the copolyamide A) has less than 0.5% by weight triamine content.

5. The polyamide molding composition according to any of claims 1 to 4, in which the copolyamide A) has greater than 20% degree of crystallinity.

6. The use of the polyamide molding compositions according to claims 1 to 5 for production of fibers, of foils, or of moldings.

7. A molding, obtainable from the polyamide molding compositions according to claims 1 to 5.

## Revendications

1. Matières à mouler polyamide partiellement aromatiques, partiellement cristallines, contenant
A) 40 à 100 % en poids d'un copolyamide constitué de
a1) 30 à 44 % en moles de motifs qui dérivent d'acide téréphtalique
a2) 6 à 20 % en moles de motifs qui dérivent d'acide isophtalique
a3) 42 à 49,5 % en moles de motifs qui dérivent d'hexaméthylènediamine
a4) 0,5 à 8 % en moles de motifs qui dérivent de diamines aromatiques ayant de 6 à 30 atomes de carbone
la somme des pourcentages en moles des composants a1) à a4) étant égale à 100 %, et
B) 0 à 50 % en poids d'une charge fibreuse ou particulaire
C) 0 à 30 % en poids d'un polymère élastique comme le caoutchouc
D) 0 à 30 % en poids d'autres additifs et adjuvants de mise en oeuvre
la somme des pourcentages en poids des composants A) à D) étant égale à 100 %.

2. Matières à mouler polyamide selon la revendication 1, dans lesquelles le copolyamide A) est constitué de
a1) 32 à 40 % en moles
a2) 10 à 18 % en moles
a3) 45 à 48,5 % en moles
a4) 1,5 à 5 % en moles.

3. Matières à mouler polyamide selon la revendication 1 ou 2, dans lesquelles la diamine aromatique a4) est constituée de
p-xylylènediamine ou
m-xylylènediamine ou
o-xylylènediamine ou
xylylènediamines substituées par alkyle
ou de mélanges de celles-ci.

4. Matières à mouler polyamide selon les revendications 1 à 3, dans lesquelles le copolyamide A) présente une teneur en triamine de moins de 0,5 % en poids.

5. Matières à mouler polyamide selon les revendications 1 à 4, dans lesquelles le copolyamide A) présente un degré de cristallinité supérieur à 20 %.

6. Utilisation des matières à mouler polyamide selon les revendications 1 à 5, pour la production de fibres, de films ou de corps moulés.

7. Corps moulé, pouvant être obtenu à partir des matières à mouler polyamide selon les revendications 1 à 5.
